# EUROPÄISCHE PATENTSCHRIFT

(11) **EP 0 965 406 B1**
(45) Veröffentlichungstag und Bekanntmachung des Hinweises auf die Patenterteilung: **19.11.2008**
(21) Anmeldenummer: 99810526.6
(22) Anmeldetag: 14.06.1999
(51) Int. Cl.: E21B 10/58, B23B 51/02

(54) **Bohrwerkzeug**
Drilling tool
Outil de forage

(30) Priorität: 20.06.1998 DE 19827535
(43) Veröffentlichungstag der Anmeldung: 22.12.1999
(73) Patentinhaber: HILTI Aktiengesellschaft, 9494 Schaan (LI)
(72) Erfinder: Kleine, Werner, 28832 Achim (DE); Geiger, Harald, 86916 Kaufering (DE)
(74) Vertreter: Wildi, Roland

(56) Entgegenhaltungen:
- DE-A- 4 012 772
- DE-A- 19 605 801
- GB-A- 2 302 664
- US-A- 4 294 319
- US-A- 5 725 337

## Beschreibung

Die Erfindung betrifft ein Bohrwerkzeug gemäss dem Oberbegriff des Patentanspruchs 1.

Zur Erstellung von Bohrungen in Beton, Mauerwerk, Gestein oder dgl. werden Bohrwerkzeuge eingesetzt, die einen Bohrkopf mit Schneiden aus einem Schneidwerkstoff, vorzugsweise aus einem Hartmetall, aufweisen. Die Bohrwerkzeuge werden üblicherweise in handgeführte Bohrgeräte eingesetzt, die zusätzlich zum Drehantrieb des Bohrwerkzeugs auch axiale Schläge erzeugen. Die axialen Schläge werden auf das in die Werkzeugaufnahme des Bohrgeräts eingesetzte Bohrwerkzeug abgegeben und über den Schaft und den Bohrkopf in den zu bearbeitenden Untergrund eingeleitet. Auf diese Weise wird der Untergrund schabend, meisselnd bearbeitet und chipweise abgebaut. Im Einsatz kommt es nicht bloss auf die Standzeit des Bohrwerkzeugs an. Vor allem bei professionellen Anwendungen spielen der erzielbare Bohrfortschritt und der erforderliche Kraftaufwand eine grosse Rolle. Aus dem Stand der Technik sind eine Reihe von Vorschlägen bezüglich der Anordnung der Schneiden im Bohrkopf bekannt, die einerseits einen schnellen Bohrfortschritt und einen möglichst geringen Kraftaufwand gewährleisten sollen.

In der DE-C-195 16 270 ist eine Schneidenanordnung vorgeschlagen, bei der eine sich über den Durchmesser des Bohrkopfs erstreckende Schneidplatte eine Hauptschneide und eine axial zurückgesetzte Sekundärschneide aufweist. Radial angeordnete plattenförmige Zusatzschneiden überragen den Umfang des Bohrkopfs radial derart, dass sie den Bohrungsdurchmesser definieren. Der axiale Überstand der Zusatzschneiden gegenüber der Stirnfläche des Bohrkopfs liegt zwischen den axialen Überständen der Primärschneide und der Sekundärschneide. Die radial längere Primärschneide umfasst eine Zentrierspitze, die mit der Längsachse des Schafts zusammenfällt. Der radiale Überstand der Primärschneide ist gleich oder kleiner als der radiale Überstand der Zusatzschneiden. Zwischen der Primärschneide und den Zusatzschneiden münden im Kopf Bohrmehlabfuhrnuten. Zwei weitere, deutlich kleinere Bohrmehlabfuhrnuten münden zwischen den Zusatzschneiden und der Sekundärschneide. Während die geometrische Anordnung der Schneiden einen guten erzielbaren Bohrfortschritt erwarten lässt, kann die ungleichmässige Zuordnung der Abfuhrnuten zu den Schneiden zu einer verminderten Bohrleistung und zu ungleichmässigen Bohrungen führen. Besonders deutlich ist dieses Missverhältnis bei den den Zusatzschneiden zugeordneten Bohrkopfnuten ersichtlich. Die sich über den Durchmesser des Bohrkopfs erstreckende Schneidplatte ist im Verhältnis zu den Zusatzschneidplatten sehr massiv ausgebildet. Sie ist in eine durchgehende Nut in der Stirnfläche des Bohrkopfs eingebettet. Der zu beiden Längsseiten der Schneidplatte verbleibende Materialsteg des Bohrkopfs ist relativ dünn ausgebildet, was sich negativ auf die Standzeit des Bohrwerkzeugs auswirken kann.

Aus der DE-A-23 48 874 ist ein Bohrwerkzeug mit einem Bohrkopf mit drei im gleichen Winkelabstand voneinander radial angeordneten Schneidplatten beschrieben, die durch etwa axial verlaufende Kopfnuten voneinander getrennt sind. Die längere der drei Schneidplatten umfasst eine mit der Schaftachse zusammenfallende Zentrierspitze und erstreckt sich darüber hinaus etwas in Richtung der gegenüberliegenden Kopfnut. Der ein Zentrierteil bildende Mittenabschnitt der längeren Schneidplatte, der die Zentrierspitze umfasst, weist eine relativ kleine radiale Erstreckung auf. Entsprechend ist mit einem derartigen Bohrwerkzeug eine nur ungenügende Zentrierung zu erwarten. Die zwischen den Schneiden verlaufenden Kopfnuten für die Bohrmehlabfuhr weisen relativ kleine Querschnitte auf. Dies wirkt sich im allgemeinen negativ auf den erzielbaren Bohrfortschritt aus.

Nach der DE4012772 weist ein Bohrwerkzeug eine länglichen Schaft mit wenigstens einer wendelförmigen Abfuhrnut für Bohrklein auf, an dessen einem Längsende ein Einsteckende für die Werkzeugaufnahme eines Bohrgeräts vorgesehen ist und dessen gegenüberliegendes Längsende an einen Bohrkopf angrenzt, der mit einer, im axial verlaufenden Kopfnut ausgestattet ist, die in die Abfuhrnut mündet, und dessen Stirnfläche von Schneiden aus einem Schneidwerkstoff überragt sind, wobei die Schneiden ein Zentrierteil mit einer Zentrierspitze, die mit der Achse des Schafts zusammenfällt, und wenigstens drei im Winkelabstand voneinander angeordnete Umfangsschneiden tragende Umfangsschneidkörper umfassen, die gegenüber der Zentrierspitze axial zurückgesetzt sind und den Umfang des Bohrkopfs derart radial überragen, dass sie den Bohrdurchmesser definieren, wobei das Zentrierteil mindestens zwei Zentrierschneiden aufweist, die sich von der Zentrierspitze in Richtung des Umfangs, des Bohrkopfs erstrecken und mit jeweils einem der Umfangsschneidkörper fluchten und deren Zahl maximal gleich der Anzahl der Umfangsschneidkörper ist. Zudem sind die Umfangsschneiden tragenden Schneidkörper plattenförmig ausgebildet und verlaufen im parallel zur jeweiligen fluchtenden Zentrierschneide, wobei die Plattenstärke der die Umfangsschneiden tragenden Umfangsschneidkörper gleich oder grösser als die Plattenstärke des Zentrierteils ist.

Aufgabe der vorliegenden Erfindung ist es daher, diesen Nachteilen der Bohrwerkzeuge des Stands der Technik abzuhelfen. Es soll ein Bohrwerkzeug geschaffen werden, das einen hohen Bohrfortschritt bei guter Zentrierwirkung und hoher Lebensdauer gewährleistet. Dazu soll das Bohrwerkzeug einfach und kostengünstig herstellbar sein.

Die Lösung dieser Aufgaben besteht in einem Bohrwerkzeug, das die im kennzeichnenden Abschnitt des Patentanspruchs 1 angeführten Merkmale aufweist. Das erfindungsgemässe Bohrwerkzeug weist einen länglichen Schaft mit wenigstens einer wendelförmigen Abfuhrnut für Bohrklein auf, an dessen einem Längsende ein Einsteckende für die Werkzeugaufnahme eines Bohrgeräts vorgesehen ist und dessen gegen überliegendes Längsende an einen Bohrkopf angrenzt. Der Bohrkopf ist möglichst kompakt ausgebildet und besitzt ein im wesentlichen plane oder kegelige Frontgeometrie. Er ist mit wenigstens einer, vorzugsweise im wesentlichen axial verlaufenden Kopfnut ausgestattet, die in die wenigstens eine Abfuhrnut mündet. Die Stirnfläche des Bohrkopfs ist von Schneiden aus einem Schneidwerkstoff überragt. Die Schneiden umfassen ein Zentrierteil mit einer Zentrierspitze, die mit der Achse des Schafts zusammenfällt, und wenigstens drei im Winkelabstand voneinander angeordnete, Umfangsschneiden tragende Umfangsschneidkörper, die gegenüber der Zentrierspitze axial zurückgesetzt sind und den Umfang des Bohrkopfs derart radial überragen, dass sie den Bohrdurchmesser definieren. Das Zentrierteil weist genau drei Zentrierschneiden auf, die sich von der Zentrierspitze in Richtung des Umfangs des Bohrkopfs erstrecken und mit jeweils einem der Umfangsschneidkörper im wesentlichen fluchten und deren Zahl maximal gleich der Anzahl der Umfangsschneidkörper ist.

Für die Zentrierwirkung des Zentrierteils ist es wesentlich, dass das Zentrierteil rotationssymmetrisch ausgebildet ist. Bei einem Zentrierteil mit drei Zentrierschneiden beträgt der Symmetriewinkel dann beispielsweise 120°.

Die Zentrierschneiden schliessen miteinander einen Winkel ein, der dem Winkelabstand der Umfangsschneiden entspricht, mit denen sie jeweils im wesentlichen fluchten. Das Vorsehen von wenigstens zwei Zentrierschneiden weist den Vorteil auf, dass die vom Bohrgerät auf das Bohrwerkzeug abgegebenen axialen Schläge, die, insbesondere beim Anbohrvorgang, hauptsächlich über das Zentrierteil in den Untergrund eingeleitet werden, auf die Zentrierschneiden verteilt werden. Entsprechend wird die einzelne Zentrierschneide nicht so tief in den Untergrund eingetrieben, das Material kann bei der Rotation des Bohrwerkzeugs leichter abgeschert werden, und der Kraftaufwand für den Anwender kann klein gehalten werden. Die abgebauten Bruchstücke weisen eine relativ geringe Grösse auf. Die nachfolgenden Schneiden müssen nur mehr geringe Zerkleinerungsarbeit leisten und das abgebaute Material wird schneller über die Kopfnut(en) aus dem Abbaubereich entfernt. Die fluchtende Anordnung erleichtert die Montage der Zentrierschneiden und der Umfangsschneiden im Bohrkopf, indem die zusammengehörigen Schneiden jeweils in derselben durchgehenden Montagenut in der Stirnfläche des Bohrkopf befestigt werden können.

Vorzugsweise sind auch die die Umfangsschneiden tragenden Schneidkörper plattenförmig ausgebildet und verlaufen im wesentlichen radial, insbesondere parallel zur jeweiligen fluchtenden Zentrierschneide. Die plattenförmigen Umfangsschneidkörper weisen eine grössere radiale Erstreckung auf als beispielsweise stiftförmige Schneidkörper. Demnach beabeiten sie einen grösseren Bereich des Untergrunds und fördern die Bohrleistung des Bohrwerkzeugs.

In einer Variante der Erfindung, die herstellungstechnische Vorteile bietet, ist die Plattenstärke der Umfangsschneidplatten wenigstens gleich gross wie die Plattenstärke des Zentrierteils. Bei gleich grosser Plattenstärke liegt der Vorteil darin, dass die Montagenuten für die plattenförmigen Schneidteile mit den gleichen Werkzeugen erstellt werden können. Indem die Plattenstärke der Umfangsschneiden grösser ist als die Plattenstärke des Zentrierteils kann dem Umstand Rechnung getragen werden, dass die Umfangsgeschwindigkeit der Umfangsschneiden grösser ist als diejenige des im Mittenbereich des Bohrkopf angeordneten Zentrierteils. Die Aufteilung des abbauenden Schneiden in Zentrierschneiden und Umfangsschneiden erlaubt es auch, die Umfangsschneiden aus einem härteren Schneidwerkstoff und das Zentrierteil aus einem schlagzähen Schneidwerkstoff herzustellen, um auf diese Weise den unterschiedlichen Anforderungen an die Schneiden Rechnung zu tragen.

Vor allem bei grösseren Bohrdurchmessern erweist es sich als vorteilhaft für den Bohrfortschritt, wenn die Zentrierschneiden und die Umfangsschneiden in radialer Richtung beabstandet sind. Dabei weist der bei der Rotation des Schafts von den freien Aussenkanten der Zentrierschneiden beschriebene Hüllkreis einen Radius auf, der etwa 1 mm bis etwa 8 mm, vorzugsweise wenigstens 2 mm, kleiner ist als der Radius der von den der Schaftachse näheren Innenkanten der Umfangsschneiden beschriebene Hüllkreis.

In einer Variante der Erfindung kann im Bereich zwischen den Umfangsschneiden und den Zentrierschneiden wenigstens eine weitere Schneide angeordnet sein. Die wenigstens eine zusätzliche Schneide kann stiftförmig oder plattenförmig ausgebildet sein. Im Fall einer plattenförmigen Ausbildung kann die Erstreckung der Zusatzschneide derart gewählt sein, dass sie mit einer der Umfangsschneiden und/oder einer der Zusatzschneiden radial überlappt.

Für die Gleichlaufeigenschaften des Bohrwerkzeugs und für den Bohrfortschritt erweist es sich von Vorteil, wenn alle zum Umfang des Bohrkopfs hin abfallenden Schneiden auf einer einzigen Kegelmantelfläche angeordnet sind.

Die Zahl der Kopfnuten entspricht vorzugsweise der Anzahl der Umfangsschneiden, wobei benachbarte Umfangsschneiden jeweils durch eine Kopfnut voneinander getrennt sind. Dadurch ist jeder Umfangsschneide eine Kopfnut zugeordnet, was sich vorteilhaft auf die Geschwindigkeit auswirkt, mit der das abgebaute und zerkleinerte Material aus dem Eingriffsbereich der Schneiden abtransportiert wird.

Aus Symmetrieüberlegungen und aus Gründen eines noch weiter verbesserten Gleichlaufs des Bohrwerkzeugs weisen benachbarte Umfangsschneiden den gleichen Winkelabstand voneinander auf.

Die vom Bohrgerät auf das Bohrwerkzeug abgegebenen axialen Schläge werden insbesondere beim Anbohrvorgang in erster Linie über das Zentrierteil in den Untergrund eingeleitet. Um der höheren Schlagbeanspruchung des Zentrierteils Rechnung zu tragen, weist das plattenförmige Zentrierteil im Bereich seines in den Bohrkopf eingebetteten Fussteils wenigstens eine Erweiterung auf, die im achsnahen Bereich des Fussteils angeordnet und vorzugsweise teilkreisartig ausgebildet ist. Die Erweiterung dient der Verstärkung des Zentrierteils. Zusätzlich bildet sie eine Montagehilfe bei der Befestigung des Zentrierteils in einer korrespondierend ausgebildeten Nut in der Stirnfläche des Bohrkopfs. Die Erweiterung kann gegenüber der Schaftachse versetzt sein. Es erweist sich jedoch von Vorteil, wenn auch die teilkreisförmigen Erweiterungen symmetrisch zueinander vorgesehen sind und insbesondere die Schaftachse als Mittelpunkt besitzen.

In einer alternativen Ausführungsvariante kann das Zentrierteil auch ein rotationssymmetrisches, vorzugsweise zylindrisches, Fussteil aufweisen. Der Rotationsmittelpunkt fällt dabei mit der Schaftachse zusammen.

Das Fussteil des Zentrierteils und/oder der die Umfangsschneiden tragenden Schneidkörper weist vorzugsweise eine im wesentlichen halbkreisförmigen Aussenkontur auf. Dadurch ist die Fussform optimal an die Kontur der Montagenuten im Bohrkopf angepasst, die üblicherweise mit Fingerfräsern erstellt werden. Das Zentrierteil und/oder die Schneidkörper füllen die Montagenuten bis zum Nutengrund hin aus. Sie sind besser im Bohrkopf gehalten und abgestützt, wodurch die Bruchanfälligkeit reduziert wird.

Für die abbauende Bearbeitung des Materials erweist es sich als zweckmässig, wenn der von den Zentrierschneiden an der Zentrierspitze eingeschlossene Spitzenwinkel zwischen etwa 110° und etwa 150° liegt.

Im folgenden wird die Erfindung unter Bezugnahme auf Ausführungsbeispiele erläutert, die in den schematischen Zeichungen dargestellt sind. Es zeigen:
- Fig. 1: eine Draufsicht auf den mit Schneiden bestückten Bohrkopf eines ersten Ausführungsbeispiels des erfindungsgemässen Bohrwerkzeugs; und
- Fig. 2: eine schematische Seitenansicht des Bohrwerkzeugs gemäss Fig. 1.

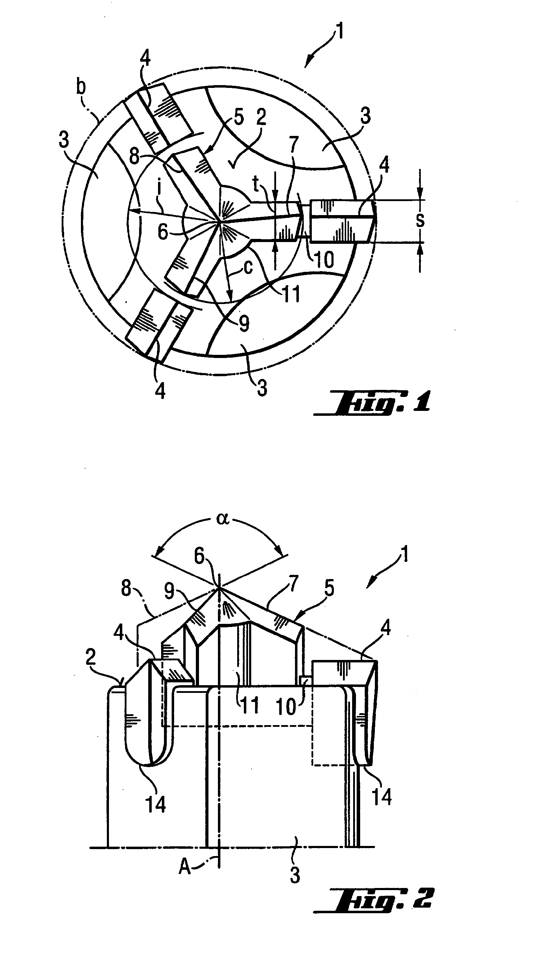

Das in den Fig. 1 und 2 dargestellte Ausführungsbeispiel des Bohrwerkzeugs weist einen an einen länglichen Schaft angrenzenden Bohrkopf 1 auf, dessen Stirnfläche 2 von Schneiden überragt wird, die aus einem Schneidwerkstoff, vorzugsweise aus einem Hartmetall, bestehen. Der Schaft ist an seinem dem Bohrkopf gegenüberliegenden Endabschnitt beispielsweise mit einem an sich bekannten Einsteckende für die Werkzeugaufnahme eines vorzugsweise handgeführten Bohrgeräts ausgestattet, das während der Rotation des Bohrwerkzeugs um seine Achse A axiale Schläge auf das rückwärtige Ende des Bohrwerkzeugs abgibt. Derartige Bohrgeräte sind beispielsweise die Hammerbohr- und/oder Meisselgeräte der Anwenderin. Die axialen Schläge werden über den länglichen Schaft und den mit Schneiden bestückten Bohrkopf 1 in den zu bearbeitenden Untergrund eingeleitet.

Gemäss Fig. 1 weist der Bohrkopf 1 des Bohrwerkzeugs drei Kopfnuten 3 auf, die sich im wesentlichen axial erstrecken und in wenigstens eine Abfuhrnut münden, die wendelförmig am Schaft des Bohrwerkzeugs verläuft und für den Abtransport des vom Untergrund abgebauten Materials vorgesehen ist. Gemäss dem dargestellten Ausführungsbeispiel sind die Kopfnuten 3 im gleichen Winkelabstand zueinander angeordnet. Zwischen den Kopfnuten 3 wird die Stirnfläche 2 des Bohrkopfs im Peripheriebereich von drei Umfangsschneiden 4 überragt, deren radialer Überstand gegenüber dem Umfang des Bohrkopfs 1 den Bohrdurchmesser definiert. Die Kontur des Hüllkreises b der Umfangsschneiden 4 ist strichliert angedeutet und mit dem Bezugszeichen b versehen. Die Umfangsschneiden 4 verlaufen im wesentlichen radial und sind an plattenförmigen Schneideinsätzen vorgesehen, die in Nuten in der Stirnfläche 2 des Bohrkopfs 1, beispielsweise durch Löten, befestigt sind. Die beispielsweise drei Umfangsschneiden 4 sind in Umfangsrichtung gegenüber dem tiefsten Bereich der Kopfnuten 3 versetzt. Aus ihrer symmetrischen Anordung ergibt sich beispielsweise jeweils ein Versatz in Umfangsrichtung von etwa 60°.

Im Mittenbereich des Bohrkopfs 1 erhebt sich ein plattenförmiges Zentierteil 5 mit drei im Winkelabstand zueinander verlaufenden Zentrierschneiden 7, 8, 9, die sich von einer Zentrierspitze 6, die mit der Achse des Schafts zusammenfällt, im wesentlichen radial in Richtung der Umfangsschneiden 4 erstrecken. Die Zentrierschneiden 7, 8, 9 überragen die im Peripheriebereich des Bohrkopfs 1 angeordneten Umfangsschneiden in axialer Richtung. Die Zentrierschneiden 7, 8 , 9 fallen zum Umfang des Bohrkopfs 1 derart ab, dass sie mit den Umfangsschneiden 4 auf einer Kegelmantelfläche liegen. Die Anordnung des Zentrierteils 5 ist dabei derart gewählt, dass die Zentrierschneiden 7, 8, 9 und die Umfangsschneiden 4 jeweils im wesentlichen miteinander fluchten. Die Umfangsschneiden 4 weisen gegenüber den fluchtenden Zentrierschneiden 7, 8, 9 einen radialen Abstand auf. Der Abstand ist derart gewählt, dass der bei der Rotation des Bohrwerkzeugs von den freien Aussenkanten der Zentrierschneiden 7, 8, 9 beschriebene Hüllkreis einen Radius c aufweist, der etwa 1 mm bis etwa 8 mm, vorzugsweise mindestens 2 mm kleiner ist als der Radius i des Hüllkreises, der von den Innenkanten der Umfangsschneiden 4 beschrieben wird. Zusätzlich zu den dargestellten, voneinander radial beabstandeten Schneiden 4, 7, 8, 9 kann noch wenigstens eine weitere Schneide vorgesehen sein, deren schneidwirksamer Bereich sich im wesentlichen radial über den Zwischenraum zwischen den Umfangsschneiden 4 und den Zentrierschneiden 7, 8, 9 erstreckt.

Das Zentrierteil 5 und die Umfangsschneiden 4 können als separate plattenförmige Schneidkörper ausgebildet sein. Vorzugsweise ist dabei das Zentrierteil 5 rotationssymmetrisch ausgebildet. Bei einem Zentrierteil 5 mit drei Zentrierschneiden beträgt der Symmetrierwinkel dann 120°. In einer alternativen Ausführungsvariante können einzelne oder alle Zentrierschneiden 7 über einen Verbindungssteg 10 einstückig mit den in radialer Verlängerung angrenzenden Umfangsschneiden 4 verbunden sein. Die Umfangsschneiden 4 weisen vorzugsweise eine Plattenstärke s auf, die grösser ist als die Plattenstärke t der Zentrierschneiden. Das in den Bohrkopf 1 eingebettete Fussteil des Zentrierteils 5 ist zwischen seinen die Zentrierschneiden 7, 8, 9 tragenden Armen mit teilkreisförmigen Erweiterungen 11 versehen, die in korrespondierende Aussparungen in der Stirnfläche 2 des Bohrkopfs 1 eingesetzt sind. Das Fussteil 14 der Arme des Zentrierteils 5 weist vorzugsweise eine im wesentlichen halbkreisförmige Aussenkontur auf.

Die Erfindung wurde am Beispiel eines Bohrwerkzeugs mit drei Kopfnuten und drei Zentrierschneiden erläutert. Es versteht sich, dass die Aufgaben der Erfindung auch mit einem Bohrwerkzeug lösbar sind, das nur wenigstens eine Kopfnut zur Bohrmehlabfuhr und wenigstens zwei Zentrierschneiden aufweist, die mit den in radialer Verlängerung an der Peripherie des Bohrkopfs angeordneten Umfangsschneiden fluchten. Die Zahl der Zentrierschneiden ist maximal gleich der Anzahl der Umfangsschneiden.

## Patentansprüche

1. Bohrwerkzeug mit einem Bohrkopf und mit einem länglichen Schaft mit wenigstens einer wendelförmigen Abfuhrnut für Bohrklein, an dessen einem Längsende ein Einsteckende für die Werkzeugaufnahme eines Bohrgeräts vorgesehen ist und dessen gegenüberliegendes Längsende an den Bohrkopf (1) angrenzt, der mit wenigstens einer, vorzugsweise im wesentlichen axial verlaufenden Kopfnut (3) ausgestattet ist, die in die wenigstens eine Abfuhrnut mündet, und dessen Stirnfläche (2) von Schneiden aus einem Schneidwerkstoff überragt sind, wobei die Schneiden ein Zentrierteil (5) mit einer Zentrierspitze (6), die mit der Achse (A) des Schafts zusammenfällt; und wenigstens drei im Winkelabstand voneinander angeordnete Umfangsschneiden (4) tragende Umfangsschneidkörper umfassen, die gegenüber der Zentrierspitze (6) axial zurückgesetzt sind und den Umfang des Bohrkopfs (1) derart radial überragen, dass sie den Bohrdurchmesser (b) definieren, **dadurch gekennzeichnet, dass** das Zentrierteil (5) genau drei Zentrierschneiden (7, 8, 9) aufweist, die sich von der Zentrierspitze (6) in Richtung des Umfangs des Bohrkopfs (1) erstrecken und mit jeweils einem der Umfangsschneidkörper im wesentlichen fluchten und deren Zahl maximal gleich der Anzahl der Umfangsschneidkörper ist und dass das Zentrierteil rotationssymmetrisch ausgebildet ist.

2. Bohrwerkzeug nach Anspruch 1, **dadurch gekennzeichnet, dass** die die Umfangsschneiden (4) tragenden Schneidkörper plattenförmig ausgebildet sind und im wesentlichen radial, insbesondere parallel zur jeweiligen fluchtenden Zentrierschneide (7, 8, 9), verlaufen.

3. Bohrwerkzeug nach Anspruch 2, **dadurch gekennzeichnet, dass** die Plattenstärke (s) der die Umfangsschneiden (4) tragenden Umfangsschneidkörper gleich oder grösser ist als die Plattenstärke (t) des Zentrierteils (5).

4. Bohrwerkzeug nach einem der vorangehenden Ansprüche, **dadurch gekennzeichnet, dass** der bei der Rotation des Schafts von den freien Aussenkanten der Zentrierschneiden (7, 8, 9) beschriebene Hüllkreis einen Radius (c) aufweist, der etwa 1 mm bis etwa 8 mm, vorzugsweise wenigstens 2 mm, kleiner ist als der Radius (i) der von den der Schaftachse (A) näheren Innenkanten der Umfangsschneiden (4) beschriebene Hüllkreis.

5. Bohrwerkzeug nach Anspruch 4, **dadurch gekennzeichnet, dass** im Bereich zwischen den Umfangsschneiden (4) und den Zentrierschneiden (7, 8, 9) wenigstens eine weitere Schneide angeordnet ist.

6. Bohrwerkzeug nach einem der vorangehenden Ansprüche, **dadurch gekennzeichnet, dass** alle zum Umfang des Bohrkopfs (1) hin abfallenden Schneiden (4, 7, 8, 9) auf einer einzigen Kegelmantelfläche liegen.

7. Bohrwerkzeug nach einem der Ansprüche 1 - 3, **dadurch gekennzeichnet, dass** die die Umfangsschneiden tragenden Schneidkörper wenigstens teilweise einstückig mit dem Zentrierteil ausgebildet sind.

8. Bohrwerkzeug nach einem der vorangehenden Ansprüche, **dadurch gekennzeichnet, dass** die Zahl der Kopfnuten (3) der Anzahl der Umfangsschneiden (4) entspricht, wobei benachbarte Umfangsschneiden (4) jeweils durch eine Kopfnut (3) voneinander getrennt sind.

9. Bohrwerkzeug nach Anspruch 8, **dadurch gekennzeichnet, dass** benachbarte Umfangsschneiden (4) den gleichen Winkelabstand voneinander aufweisen.

10. Bohrwerkzeug nach einem der vorangehenden Ansprüche, **dadurch gekennzeichnet, dass** das plattenförmige Zentrierteil (5) im Bereich seines in den Bohrkopf eingebetteten Fussteils wenigstens eine Erweiterung (11) aufweist, die im achsnahen Bereich des Fussteils angeordnet und vorzugsweise teilkreisartig ausgebildet ist.

11. Bohrwerkzeug nach einem der Ansprüche 1 - 10, **dadurch gekennzeichnet, dass** das Zentrierteil und/oder die Schneidkörper an ihren den Schneiden abgewandten, in den Bohrkopf eingebetteten Seiten jeweils ein Fussteil (14) mit einer im wesentlichen halbkreisförmigen Aussenkontur aufweisen.

12. Bohrwerkzeug nach einem der vorangehenden Ansprüche, **dadurch gekennzeichnet, dass** die Zentrierschneiden im Bereich der Zentrierspitze einen Spitzenwinkel (α) einschliessen, der zwischen 110° und 150° liegt.

## Claims

1. Drill with a drill head and a oblong shaft with at least one spiral shaped groove for removing borings, at one longitudinal end of which a shank is provided for the tool holder of drilling equipment and the opposite longitudinal end of which adjoins the drill head (1), which is fitted with at least one head groove (3), which preferably runs essentially axially, which comes out into at least one removing groove, and the face (2) of which is protruded over by cutting edges made out of a cutting material, in which the cutting edges comprise a centring part (5) with a centring point (6), which coincides with the axis (A) of the shaft, and at least three circumferential cutting bodies carrying circumferential cutting edges (4), which are arranged at an angular distance from each other, which are set back axially opposite the centring point (6) and protrude over the circumference of the drill head (1) radially in such a way that they define the hole diameter (b), **characterised in that** the centring part (5) has precisely three centring cutting edges (7, 8, 9), which extend from the centring point (6) in the direction of the circumference of the drill head (1) and essentially each align with one of the circumferential cutting bodies and the maximum number of which is the same as the number of circumferential cutting bodies and that the centring part is made rotationally symmetrical.

2. Drill according to claim 1, **characterised in that** the cutting bodies carrying the circumferential cutting edges (4) are made plate shaped and each run essentially radially, particularly parallel to the aligning centring cutting edges (7, 8, 9).

3. Drill according to claim 2, **characterised in that** the plate thickness (s) of the circumferential cutting bodies carrying the circumferential cutting edges (4) is the same or greater than the plate thickness (t) of the centring part (5).

4. Drill according to one of the previous claims, **characterised in that** the envelope circle described by the free outside edges of the centring cutting edges (7, 8, 9) during rotation of the shaft has a radius (c), which is about 1 mm to about 8 mm, preferably at least 2 mm smaller than the radius (i) of the envelope circle described by the inside edges of the circumferential cutting edges (4), which are closer to the axis of the shaft (A).

5. Drill according to claim 4, **characterised in that** at least one further cutting edge is arranged in the area between the circumferential cutting edges (4) and the centring cutting edges (7, 8, 9).

6. Drill according to one of the previous claims, **characterised in that** all the cutting edges (4, 7, 8, 9) sloping towards the circumference of the drill head (1) lie on a single conical shell surface.

7. Drill according to one of claims 1 - 3, **characterised in that** the cutting bodies carrying the circumferential cutting edges are made at least partly in one piece with the centring part.

8. Drill according to one of the previous claims, **characterised in that** the number of head grooves (3) corresponds to the number of circumferential cutting edges (4), in which adjacent circumferential cutting edges (4) are each separated from each other by a head groove (3).

9. Drill according to claim 8, **characterised in that** adjacent circumferential cutting edges (4) are at the same angular distance from each other.

10. Drill according to one of the previous claims, **characterised in that** the plate shaped centring part (5) has at least one extension (11) in the area of its foot part, which is embedded in the drill head, which is arranged in the area of the foot part near the axis and preferably is made like a pitch circle.

11. Drill according to one of claims 1 - 10, **characterised in that** the centring part and/or the cutting bodies each have a foot part (14) with an essentially semicircular external contour, which is embedded in the drill head on the sides turned away from the cutting edges.

12. Drill according to one of the previous claims, **characterised in that** the centring cutting edges enclose a point angle (α) in the area of the centring point, which lies between 110° and 150°.

## Revendications

1. Foret comprenant une tête de forage et une tige allongée avec au moins une gorge d'évacuation hélicoïdale pour des débris de forage, à une extrémité longitudinale du foret étant prévue une extrémité d'insertion pour le raccord d'outil d'une perceuse et son extrémité longitudinale opposée étant adjacente à la tête de forage (1) qui est pourvue d'au moins une gorge de tête de préférence sensiblement axiale (3) débouchant dans la gorge d'évacuation au nombre d'au moins une et dont la face frontale (2) est surmontée de taillants en matériau de coupe, les taillants comprenant une partie de centrage (5) avec une pointe de centrage (6), laquelle coïncide avec l'axe (A) de la tige, et au moins trois corps de coupe périphériques, lesquels portent des taillants périphériques (4) disposés à distance angulaire l'un de l'autre, se trouvent en retrait axial par rapport à la pointe de centrage (6) et dépassent de la circonférence de la tête de forage (1) de façon à définir le diamètre de forage (b), **caractérisé en ce que** la partie de centrage (5) comporte exactement trois taillants de centrage (7, 8, 9) qui partent de la pointe de centrage (6) en direction de la périphérie de la tête de forage (1) et sont chacun sensiblement alignés avec un des corps de coupe périphériques et dont le nombre est au maximum égal à celui des corps de coupe périphériques, et **en ce que** la partie de centrage est conçue avec une symétrie de révolution.

2. Foret selon la revendication 1, **caractérisé en ce que** les corps de coupe portant les taillants périphériques (4) sont conformés en plaques et s'étendent sensiblement radialement, en particulier parallèlement, par rapport au taillant de centrage (7, 8, 9) aligné avec chacun d'eux.

3. Foret selon la revendication 2, **caractérisé en ce que** l'épaisseur de plaque (s) des corps de coupe périphériques portant les taillants périphériques (4) est égale ou supérieure à l'épaisseur de plaque (t) de la partie de centrage (5).

4. Foret selon une des revendications précédentes, **caractérisé en ce que** le cercle d'enveloppe décrit lors de la rotation de la tige par les arêtes extérieures libres des taillants de centrage (7, 8, 9) présente un rayon (c) inférieur d'environ 1 mm à environ 8 mm, de préférence d'au moins 2 mm, au rayon (i) du cercle d'enveloppe décrit par les arêtes intérieures, plus proches de l'axe de tige (A), des taillants périphériques (4).

5. Foret selon la revendication 4, **caractérisé en ce que** dans la zone entre les taillants périphériques (4) et les taillants de centrage (7, 8, 9) est disposé au moins un taillant supplémentaire.

6. Foret selon une des revendications précédentes, **caractérisé en ce que** tous les taillants (4, 7, 8, 9) descendant vers la périphérie de la tête de forage (1) se trouvent sur une même surface périphérique conique.

7. Foret selon une des revendications 1 à 3, **caractérisé en ce que** les corps de coupe portant les taillants périphériques sont conçus, au moins en partie, d'un seul tenant avec la partie de centrage.

8. Foret selon une des revendications précédentes, **caractérisé en ce que** le nombre de gorges de tête (3) correspond au nombre de taillants périphériques (4), des taillants périphériques (4) voisins étant séparés l'un de l'autre par une gorge de tête (3).

9. Foret selon la revendication 8, **caractérisé en ce que** des taillants périphériques (4) voisins présentent la même distance angulaire mutuelle.

10. Foret selon une des revendications précédentes, **caractérisé en ce que**, dans la zone de sa partie de pied encastrée dans la tête de forage, la partie de centrage en forme de plaque (5) comporte au moins une partie élargie (11) qui est disposée dans la zone de la partie de pied proche de l'axe et qui est conformée de préférence en cercle partiel.

11. Foret selon une des revendications 1 à 10, **caractérisé en ce que,** sur leur côté situé à l'opposé des taillants et encastré dans la tête de forage, la partie de centrage et/ou les corps de coupe comportent chacun une partie de pied (14) présentant un contour extérieur de forme sensiblement semi-circulaire.

12. Foret selon une des revendications précédentes, **caractérisé en ce que**, dans la zone de la pointe de centrage, les taillants de centrage forment un angle aigu (α) compris entre 110° et 150°.
